# EUROPÄISCHE PATENTANMELDUNG

(11) **EP 0 695 964 A2**
(43) Veröffentlichungstag der Anmeldung: **07.02.1996**
(21) Anmeldenummer: 95112012.0
(22) Anmeldetag: 27.07.1995
(51) Int. Cl.: G02F 1/13, B60Q 3/04

(54) **Anzeigegerät mit elektrooptischer Zelle, insbesondere für ein Kraftfahrzeug-Armaturenbrett**

(30) Priorität: 01.08.1994 DE 4427173
(71) Anmelder: Valeo Borg Instruments Verwaltung GmbH, D-75189 Remchingen (DE)
(72) Erfinder: Barth, Manfred, D-75323 Wildbad-Calmbach (DE); Cremers, Rolf, Dr., D-76359 Marxzell (DE)
(74) Vertreter: COHAUSZ HASE DAWIDOWICZ & PARTNER

(57) **Zusammenfassung**

Um die Zelle eines optronischen Anzeigegerätes für eine übliche Zebragummi-Kontaktierung zur gehäusefesten Schaltungs-Platine in eine definierte Position gegen einen gehäusefesten Anschlag anzudrücken, ohne dadurch den Einbau der Zelle hinter der Gehäuse-Sichtöffnung zu behindern oder die scharfen Glas-Bruchkanten der Zellen-Scheiben zu gefährden, wird dem Anschlag gegenüber wenigstens eine Blatt-Feder eingespannt, die sich einerseits in Richtung auf den Anschlag zu gegen den Rand einer Zellen-Glasscheibe und andererseits entgegengesetzt gegen ein gehäusefestes Widerlager abstützt. Die Feder ist etwa im U-Schnitt als Lappen aus demjenigen seitlichen Bereich einer flächig gegen die Zelle anliegenden Folie freigestanzt, der den Freiraum zwischen Zelle und Widerlager überbrückt. Jeder der so definierten Lappen wird aus der Ebene der Folie herausgewölbt und in diesen Freiraum zur Biege- oder Stauch-Feder eingespannt, indem beim Zusammenbau des Anzeigegerätes ein seitlich neben der Zelle, etwa von einer Lichtleiter-Platte oder von einem Lichtkasten, vorstehender Stempel gegen den jeweiligen Lappen andrückt.

## Beschreibung

Die Erfindung betrifft ein Anzeigegerät gemäß dem Oberbegriff des Anspruchs 1.

Ein solches Anzeigegerät ist aus der DE-PS 33 O2 156 bekannt. Problematisch bei der praktischen Realisierung solcher und ähnlicher Anzeigegeräte ist eine positionsgenaue Überbrückung der dicht gestaffelten, schmalen Kontaktelektroden auf den Rändern von einerseits einer Glasplatte der Zelle und andererseits einer dieser zugeordneten Schaltungsträger-Platine mittels gummielastischer, bereichsweise leitender, sogenannter Zebra-Kontaktstreifen. Denn bei der Großserien-Montage ist aus Aufwandsgründen ein gewisses Spiel der ins Gehäuse eingelegten Zelle relativ zur gehäusefesten Platine unvermeidbar. Bei zu starkem Versatz zwischen den einander gegenüberstehenden Kontaktelektroden-Paaren ist aber die eindeutige Kontaktierung mittels des dazwischen einzuspannenden Zebra-Leitgummis nicht mehr gewährleistbar. Besonders kritisch sind die Kontaktierungsverhältnisse bei in Leitrichtung vergleichsweise hohen Zebra-Kontaktstreifen, weil deren Toleranzen (gegenüber absoluter Parallelität der Leitbereiche) über die Höhe zu großem absolutem Versatz und damit zu Fehlkontaktierungen insbesondere bei nicht genau aufeinander ausgerichteten Kontaktelektroden-Paaren führen können.

Die DE-U-83 21 095 betrifft eine optische Anzeigevorrichtung, bestehend aus einem Gehäuse, in dem in Schichtbauweise eine Flüssigkeitskristallanzeige, ein Kontaktstreifen, sowie eine Abdeckung eingebracht und verrastet gehalten sind, wobei das Gehäuse in seinem Bodenbereich Querstege besitzt, mit denen schräg in den Gehäuseraum hineinragende Ansätze einstückig verbunden sind, daß im Bereich einer Seitenwand senkrecht zum Bodenbereich des Gehäuses verlaufende Stege vorgesehen sind und daß an der den Stegen gegenüberliegenden Seitenwand eine federnde Zunge angeordnet ist.

Eine Anzeigevorrichtung nach dem Oberbegriff des Anspruchs 1 ist der DE 41 05 505 A1 zu entnehmen. Allerdings wird in dieser Druckschrift weder offenbart noch nahegelegt, bei einer derartigen Vorrichtung eine Folie vorzusehen, aus der die Federn ausgewölbt werden.

Der vorliegenden Erfindung liegt deshalb die technische Aufgabe zugrunde, ein Anzeigegerät gattungmäßiger Art derart auszulegen, daß solche Kontaktierungs-Toleranzen ohne großen konstruktiven oder montagetechnischen Zusatzaufwand beim Zusammenbau zuverlässig beherrscht werden.

Diese Aufgabe wird erfindungsgemäß im wesentlichen dadurch gelöst, daß das gattungsgemäße Anzeigegerät auch nach dem Kennzeichnungsteil des Hauptanspruchs ausgelegt ist. Ergänzend wird zur Offenbarung der Erfindung auch auf die gattungsbildende zitierte Vorveröffentlichung, auf die weiteren Ansprüche und auf nachstehende Erläuterungen samt der sie abschließenden Zusammenfassung verwiesen.

Nach der erfindungsgemäßen Lösung wird also die hinter einer Sichtöffnung eingelegte elektrooptische Zelle mittels einer Feder, die aus der Hauptebene einer Folie ausgewölbt ist und sich dem Anschlag gegenüber am Gehäuse abstützt, gegen die Platine gedrückt.

Dazu könnte grundsätzlich eine gehäusefeste Schenkelfeder dienen, die an ein Gehäuseteil angeformt ist und seitlich gegen denjenigen Rand der Zelle andrückt, welcher dem gehäusefesten Referenz-Anschlag gegenüberliegt. Aber eine solche angeformte Druckfeder würde wegen der Auswerfprobematik ein teures Schieber-Spritzgußwerkzeug erfordern; und eine derart in den Einbau-Raum der Zelle hineinragende Feder würde die Montage behindern, weil diese Feder, beim rückwärtigen Einsetzen der Zelle ins Gehäuse, zunächst zur Seite gebogen werden müßte, um sie dann gegen die eingesetzte Zelle zurückdrücken zu lassen. wenn die Zelle nach dem Einsetzen ins Gehäuse statt durch eine Feder etwa mittels eines neben dem Glasrand einwirkenden vergleichsweise starren Keiles an den gegenüberliegenden Anschlag gedrückt werden sollte, dann würde das an den scharfen Glasbruch-Kanten der Zelle zu Abrieb führen; mit der Folge, daß sich später störende Partikel am Display ablagern können, und daß von der kleinflächigen Druckeinleitung auf eine Glasbruchkante eventuell sogar das Glas gefährdet wird, welches insbesondere aufgrund der in einem Kraftfahrzeug auftretenden Erschütterungen ohnehin schon mechanisch stark beansprucht ist.

Erfindungsgemäß ist deshalb für die Positionierung der Zelle im Gehäuse eine Feder zu bevorzugen, deren Wirkung erst im Zuge des Zusammenbaues des Anzeigegerätes entsteht und deren Stützwirkung gegen die Zelle keine nachteiligen mechanischen Erscheinungen an den Zellen-Glasrändern hervorruft. Das alles ist gewährleistet, wenn im Zuge der Festlegung der Zelle hinter der Gehäuse-Sichtöffnung eine auf Biegen oder gar Stauchen beanspruchte Biegefeder zwischen Gehäuse und Zelle eingespannt wird, die sich dann seitlich, oder mit ihrer Stirnkante stumpf, gegen die benachbarte Stirnkante der Zellen-Glasscheibe anlegt (also in letzterem Falle, ohne daß es zu einer flächigen Anlage eines Teiles der Feder gegen eine scharfe Glas-Bruchkante kommt). Diese Feder kann noch nicht beim Einsetzen der Zelle ins Gehäuse stören, wenn sie erst im Zuge dieser Montage als, z.B. U-förmig freigestanzter, Lappen aus dem seitlich überkragenden Stützbereich einer im übrigen an der Zelle anliegenden Folie herausgedrückt und zwischen Gehäuse und Zelle eingespannt wird. Die Folie ist der Auswölbung der Feder entgegen einerseits gegen das Gehäuse und andererseits gegen den benachbarten Randbereich der Zellen-Oberfläche abgestützt, und sie erstreckt sich vorzugsweise rahmenförmig oder sogar vollflächig über die gesamte Zellen-Oberfläche. In letzterem Falle kann die Feder unmittelbar aus einer vor oder hinter der Zelle ohnehin anzuordnenden Streu- oder Farbfilter-Folie freigestanzt sein, die sich hierfür nun nur etwas über einen Seitenrand der Zelle hinaus erstrecken muß, um den Stützbereich zu bilden. So fällt für die erfindungsgemäße Zellen-Positionierung praktisch keinerlei Zusatzaufwand an. Das gilt entsprechend für einen Stempel zum Einspannen der Feder zwischen Gehäuse und Zelle im Zuge der Zellen-Montage, da ein solcher Stempel etwa seitlich von einem, ohnehin vor oder hinter der Zelle anzuordnenden Bauteil vorstehend angeformt sein kann, wie etwa an einer Lichtleiter- oder Streu-Platte oder am Lampenhaus als den üblichen Elementen zur transmissiven Beleuchtung einer Flüssigkristall-Zelle.

Zur weiteren Erläuterung der Erfindung werden nachstehend unter Bezugnahme auf die stark vereinfachten und nicht ganz maßstabsgerechten Skizzen in der Zeichnung bevorzugte Realisierungsbeispiele näher erläutert. In der Zeichnung zeigt
- Fig. 1: ein Anzeigegerät gemäß vorstehend erläuterter Erfindung in unterbrochener Querschnittsdarstellung,
- Fig. 2: die in Fig. 1 hinter der Zelle angeordnete Folie in Draufsicht und
- Fig. 3: in Abwandlung der Gegebenheiten nach Fig. 2 eine nun nicht schmalseits sondern breitseits abgestützte optronische Zelle, hier ohne Darstellung des Stempels zum Einwölben der Andruck-Federn.

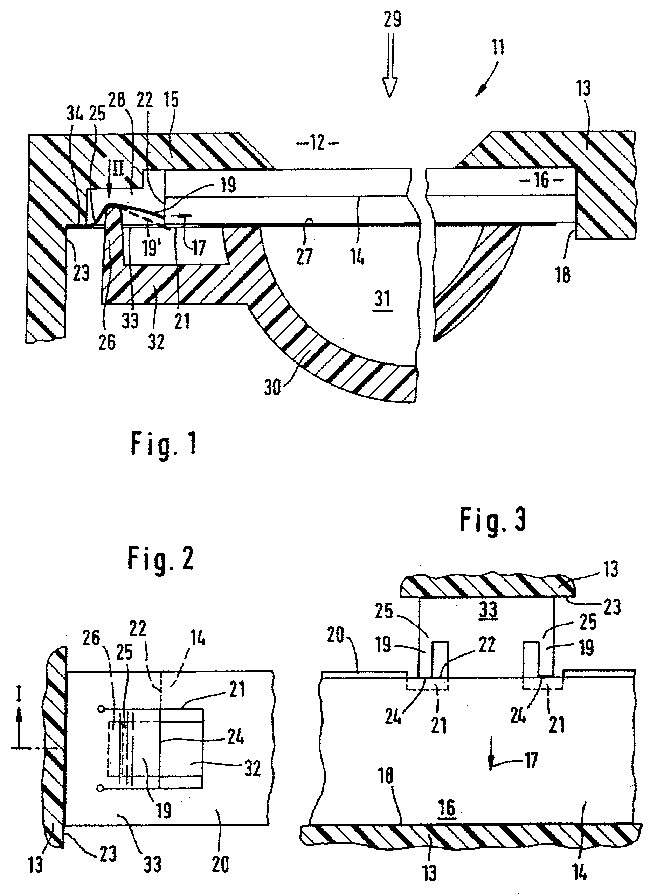

Beim skizzierten Anzeigegerät 11 mit hinter einer Sichtöffnung 12 im Gehäuse 13 gehalterter Flüssigkristall-Zelle 14 handelt es sich bevorzugt um ein optronisches Instrument in einem Kraftfahrzeug-Armaturenbrett. Der Teil des Gehäuses 13, der die Sichtöffnung 12 umgibt, überragt als Blende 15 die Randbereiche 16 der Zelle 14. Die Zelle 14 nach Fig. 1 und Fig. 2 trägt längs des breiten Randes einer ihrer Glasplatten in einem in der Schnittdarstellung der Zeichnung nicht sichtbaren Bereich) in bekannter Weise einander parallele, jeweils quer zum Glasrand sich erstreckende und einander dicht benachbarte Streifenelektroden als Kontakte für die Ansteuerung ihrer Display-Elektroden. Die elektrische Verbindung zur Ansteuerschaltung auf einer seitlich hinter der Zelle 14 im Gehäuse 13 gehalterten Verdrahtungs-Platine mit ihren integrierten Schaltungen erfolgt mittels der hierfür üblichen sogenannten Zebra-Kontaktgummistreifen. Für deren korrekte Kontaktierung zwischen den Kontaktelektroden der Zelle 14 und den damit übereinstimmend konfigurierten Kontaktelektroden auf der im Gehäuse 13 mechanisch festgelegten Platine, zwischen denen das bereichsweise elektrisch leitfähige Kontaktgummi eingespannt ist, müssen die Einbau-Toleranzen der Zelle 14 extrem gering gehalten werden. Das wird dadurch erreicht, daß die Zelle 14 mit einem ihrer nicht mit Streifenelektroden besetzten Randbereiche 16 quer zu diesem, also in Richtung 17 parallel zur Aufeinanderfolge ihrer streifenförmigen Kontaktelektroden, gegen einen gehäusefesten Anschlag 18 angedrückt wird. Dadurch ist eine zuverlässige Positions-Referenz für die Zellen-Elektroden hinsichtlich der am Gehäuse 13 festgelegten Platine eingehalten.

Dieser Andruck in Anschlag-Richtung 17 erfolgt elastisch mittels wenigstens einer blattförmigen Biege-Feder 19. Die erstreckt sich, etwa in Richtung 17 parallel zur Hauptebene der Zelle 14, neben dieser Zelle 14 und stützt sich dem Zellen-Anschlag 18 gegenüber am Gehäuse 13 ab.
Für den in Fig. 2 dargestellten Fall, daß eine Zelle 14 auf einem ihrer Längsränder mit Kontaktstreifen ausgestattet ist und deshalb der Andruck der Feder 19 gegen eine Schmalseite der Zelle 14 erfolgt, ist die Feder 19 in einem die Zelle 14 an dieser Schmalseite überragenden Stützbereich 33 einer steifbiegsamen Folie 20 freigestanzt, etwa durch einen U-Schnitt 21 als einfacher lappenförmiger Schenkel. Die Folie 20 ist im übrigen planparallel vor oder hinter wenigstens demjenigen Randbereich 16 der Zelle 14 angedrückt, welcher vom Zellen-Anschlag 18 entfernt und, jenem gegenüber, einem gehäusefesten Widerlager 23 benachbart ist.

Wenn dagegen die (in der Zeichnung nicht sichtbaren) Zellen-Kontaktstreifen längs einer Schmalseite der rechteckig berandeten Zelle 14 aufgereiht sind und die Zelle 14 deshalb in Richtung 17 quer zu ihrer Längserstreckung gegen den gehäusefesten Referenz-Anschlag 18 gedrückt wird, ist es zweckmäßiger, gemäß Fig. 3 wenigstens zwei gegeneinander distanzierte Federn 19 aus der Ebene des Folien-Stützbereiches 33 auszuwölben und gegen den Zellen-Rand 22 einzuspannen, um einen vollen, verkantungsfreien Andruck der Zelle 14 gegen ihren Anschlag 18 sicherzustellen.

Da es sich für die Ausbildung der Feder 19 bevorzugt um die bei einem solchen elektrooptischen Anzeigegerät 11 ohnehin vorhandene biegesteife Farb-, Streu- oder Schutzfolie handelt, liegt die Folie 20 dann nicht nur rahmenförmig um die Zelle 14 herum, sondern sie erstreckt sich zumindest im Bereich hinter der Sichtöffnung 12 über die gesamte Oberfläche der Zelle 14, wie es in Fig. 1 zeichnerisch berücksichtigt ist.

Damit die Lappen sich zwischen dem, dem Anschlag 18 gegenüberliegenden, Stützrand 22 der Zelle 14 und dem Gehäuse-Widerleger 23 als Biege-Federn 19' einkrümmen (in Fig. 1 gestrichelt berücksichtigt) oder sogar als Druck-Federn 19 axial einstauchen, werden diese etwa durch einen U-Schnitt 21 frei gesparten Lappen ihren Stirnenden 24 gegenüber längs Biegebereichen 25 aus der Ebene der Folie 20 heraus und in einen Freiraum 28 hinter der Blende 15, nämlich zwischen Zelle 14 und Widerlager 23, hinein gedrückt. Dafür greift ein Stempel 26 etwa quer zur Richtung 17 der Zellen- und Folien-Erstreckung gegen den jeweiligen Lappen an, der sich dabei dieser Angriffsrichtung entgegen zunächst noch an der Außen-Fläche 27 der Zelle 14 abstützt. Dabei verlagert sich das Feder-Stirnende 24 längs dieser Zellen-Anlagefläche 27 in Richtung auf den Folien-Biegebereich 25, während die Feder 19 sich in den Freiraum 28 hineinwölbt und zunächst noch nahe ihres freien Stirnendes 24 auf Biegung seitlich gegen den Zellen-Stützrand 22 anliegt. Dieses Auswölben der Feder 19 kann dann noch so weit getrieben werden, bis schließlich auch sein Stirnende 24 neben dem Zellen-Stützrand 22 in den Freiraum 28 eintaucht, womit die Feder 19 zwischen dem Widerlager 23 und dem Stützrand 22, zusätzlich zur Biegung nun auch auf Stauchung beansprucht, axial eingespannt ist.

Der Stempel 26 drückt also im Zuge der Zellen-Montage, jenach Lage der Folie 20 vor oder hinter der Zelle 14) in oder gegen Betrachtungsrichtung 29 des Anzeigegerätes 11, parallel zur Montagerichtung beim rückwärtigen Einsetzen des Zelle 14 in den Freiraum 28 hinein und dabei gegen den Folien-Stützbereich 33 neben der Zelle 14 an, um die Feder 19' ,19 auszuwölben und einzuspannen. Wenn die Folie 20 in Betrachtungsrichtung 29 vor der Zelle 14 liegt, dann ist der Stempel 26 dafür zweckmäßigerweise unmittelbar hinter einem Bereich der Blende 15 im Freiraum 28 neben der Zelle 14 angeordnet, vorzugsweise direkt im Kunststoff-Spritzguß an diese angeformt. Bei der in Fig. 1 skizzierten Lage der Folie 20 hinter der Zelle 14 kann mit dem vorragenden Stempel 26 ein rückwärtig gegen die Zelle 14 anliegendes Konstruktionselement ausgestattet sein, von dem aus der, die Zelle 14 seitlich überragende, Folien-Stützbereich 33 vom Stempel 26 gegen eine gehäusefeste Stützbacke 34 angedrückt wird. Bei diesem rückwärtigen Konstruktionsteil handelt es sich etwa um eine Lichtleiter- oder eine Streuplatte, bevorzugt aber um die Seitenwand 30 des für transmissive oder transflektive Beleuchtung hinter der Zelle 14 anliegenden Lampenhauses 31. Von dessen Seitenwand 30 ragt dann ein Arm 32 bis hinter den Freiraum 28, um hier den Stempel 26, für das Einspannen der Feder 19 im Zuge der Montage des Lampenhauses 31, zu haltern. Jedenfalls wird die Feder 19 somit erst und unmittelbar im Zuge der Montage des Anzeigegerät 11 aus der Ebene der Folie 20 ausgewölbt und in den Freiraum 28 eingespannt, um die Zelle 14 dadurch gegen den gehäusefest definierten Anschlag 18 anzudrücken. Die Feder 19 stellt also kein quer zur Montage- und Betrachtungsrichtung 29 in den Zellen-Einbauraum hineinragendes Bauelement dar, das den Zusammenbau behindern könnte.

## Patentansprüche

1. Anzeigegerät (11) mit elektrooptischer Zelle (14) in einem Gehäuse (13), insbesondere für ein Kraftfahrzeug-Armaturenbrett, dadurch gekennzeichnet, daß die Zelle (14) von wenigstens einer Feder (19) nach Art einer Blattfeder mit einem Randbereich (16) gegen einen gehäusefesten Anschlag (18) angedrückt ist, wofür die Feder (19) aus der Hauptebene einer Folie (20) ausgewölbt ist und sich dem Anschlag (18) gegenüber am Gehäuse (13) abstützt.

2. Anzeigegerät nach Anspruch 1, dadurch gekennzeichnet, daß die Feder (19', 19)' mit ihrem freien Stirnende (24) in ihrer Längsrichtung (17) etwa parallel zur Hauptebene der Zelle (14) orientiert, auf Biegung oder Stauchung zwischen ei nem Zellen-Stützrand (22) und einem Gehäuse-Widerlager (23) eingespannt ist.

3. Anzeigegerät nach Anspruch 1 oder 2, dadurch gekennzeichnet, daß jede Feder (19) als Lappen aus einer auf der Zelle (14) anliegenden Streu- oder Filter-Folie (20) in einem die Zelle (14) seitlich überragenden Stützbereich (33) freigestanzt ist.

4. Anzeigegerät nach einem der vorangehenden Ansprüche, dadurch gekennzeichnet, daß ein etwa in oder gegen Montage- bzw. Betrachtungsrichtung (29) gegen den Stützbereich (33) anliegender Stempel (26) den Lappen aus der Hauptebene der Folie (20) heraus und in einen Freiraum (28) zwischen der Zelle (14) und dem Widerlager (23) hinein drückt, bis die gebogene Blatt-Feder (19') seitlich gegen die Zelle (14) anliegt oder gar bis sich die stauchgebogene Feder (19) Stirn gegen Stirn zwischen Widerlager (23) und Stützrand (22) eingespreizt hat.

5. Anzeigegerät nach einem der vorangehenden Ansprüche, dadurch gekennzeichnet, daß ein Stempel (26) an einem in Betrachtungsrichtung (29) vor der Zelle (14) angeordneten Konstruktionselement wie einem Lichtleiter oder einer Blende (15) gehaltert ist.

6. Anzeigegerät nach einem der Ansprüche 1 bis 4, dadurch gekennzeichnet, daß ein Stempel (26) an einem in Betrachtungsrichtung (29) hinter der Zelle (14) angeordneten Konstruktionselement wie einem Lichtleiter, einer Streuscheibe oder einem Lampenhaus (31) gehaltert ist.

7. Anzeigegerät nach einem der vorangehenden Ansprüche, dadurch gekennzeichnet, daß am Gehäuse (13) eine Stützbacke (34) zur Anlage des Folien-Stützbereiches (33) ausgebildet ist.

8. Anzeigegerät nach einem der vorangehenden Ansprüche, dadurch gekennzeichnet, daß aus der Folie (20) mehrere gegeneinander versetzte Federn (19) auswölbbar sind.
